# EUROPEAN PATENT APPLICATION

(11) **EP 1 424 666 A2**
(43) Date of publication of application: **02.06.2004**
(21) Application number: 03019847.7
(22) Date of filing: 01.09.2003
(51) Int. Cl.: G08C 23/00

(54) **Broadcast receiver apparatus, broadcast receiving method and AV network system**

(30) Priority: 29.11.2002 JP 2002348302
(71) Applicant: Kabushiki Kaisha Toshiba, Tokyo (JP)
(72) Inventor: Tajima, Teruo c/o Toshiba Corporation, Minato-ku Tokyo 105-8001 (JP)
(74) Representative: Henkel, Feiler & Hänzel

(57) **Abstract**

A broadcast receiver (22) is connected to a broadcast receiver (11) via a digital interface. Information items to select receivable broadcast channels of the broadcast receiver (11) are stored in correspondence to position keys (17c) of a remote controller (17) which controls the broadcast receiver (11). Further, information items to specify the broadcast receiver (22) and select receivable broadcast channels via a digital interface are stored in correspondence to the position keys (17c). When the position key (17c) is operated, the broadcast receiver (11 or 22) is selectively caused to perform the channel selecting operation based on the stored information.

## Description

This invention relates to the improvement of a broadcast receiver apparatus which is connected to a digital interface in conformity,to the IEEE (the Institute of Electrical and Electronics Engineers) 1394 standard, for example, and a broadcast receiving method and AV network system.

As is well known in the art, recently, it is possible to configure a network system in which a plurality of pieces of AV equipment are connected to one another in a desired form by use of a serial bus using a digital interface in conformity to the IEEE 1394 standard.

In this type of network system, a specified piece of AV equipment having an image display function can be used to freely and selectively specify another piece of AV equipment and control the operation thereof.

However, in this case, it becomes necessary to display a selection screen of the other piece of AV equipment connected to the network on the screen of the specified piece of AV equipment and then the operation of selecting one of the piece of AV equipment to be controlled is performed.

After this, it becomes necessary to perform two-step operations of displaying an operation screen for controlling the selected piece of AV equipment on the screen of the specified piece of AV equipment and performing an operation of selecting desired control contents. Thus, the equipment becomes inconvenient to handle.

In a television broadcast (TV) receiver, a so-called channel preset function of allocating a plurality of broadcast channels to a plurality of position keys set on a remote controller is provided.

Simply by operating a desired position key, a broadcast channel allocated to the position key can be automatically selected according to the channel preset function. Thus, it becomes convenient to handle the equipment.

For example, in Jpn. Pat. Appln. KOKAI Publication No. 11-32262 proposed as Patent Document 1, a channel preset device for separately displaying all of receivable channels and making a preset setting based on the separate display screen is disclosed.

In the field of TV broadcasting, TV broadcasting will be changed from the terrestrial analog broadcasting to terrestrial digital broadcasting in the future. In order to watch (view and listen to) a 'terrestrial digital broadcast, a TV receiver which can cope with the terrestrial digital broadcast is required.

Therefore, in a transition period from terrestrial analog broadcasting to terrestrial digital broadcasting, TV receivers which can cope with the present terrestrial analog broadcasts and TV receivers which can cope with terrestrial digital broadcasts are used together.

In this case, it is considered that a network coping with the IEEE 1394 standard can be configured by using TV receivers which can cope with the present terrestrial analog broadcasting as specified equipment and using TV receivers which can cope with terrestrial digital broadcasting as other equipment.

However, in the above network configuration, when the receiver for the terrestrial analog broadcast controls the receiver for the terrestrial digital broadcast, two-step operations are required as described above and it becomes inconvenient to handle the equipment.

Further, when the channel preset function is used, receivable channels of the receiver for the terrestrial analog broadcast are set on the remote controller of the receiver for the terrestrial analog broadcast and the channel selecting operation is performed by use of the remote controller.

Further, in the TV receiver which can cope with terrestrial digital broadcasts, a desired broadcast channel is selected from a large number of broadcast channels by operating the exclusive remote controller thereof.

That is, the channel selecting operation of the receiver for the terrestrial digital broadcast is performed by use of the receiver for the terrestrial analog broadcast by performing the two-step troublesome operations via the network. Alternatively, the channel selecting operation is performed by use of the exclusive remote controller.

Further, in Jpn. Pat. Appln. KOKAI Publication No. 2002-223482 proposed as Patent Document 2, the configuration for controlling a to-be-controlled device connected to a controller via a network by controlling the controller by use of a remote controller is disclosed.

In addition, in Jpn. Pat. Appln. KOKAI Publication No. 2002-112367 proposed as Patent Document 3, the configuration in which the operating device determines a plurality of pieces of control equipment of the same type connected via the network and selectively controls the same is disclosed.

However, in neither of the above Patent Documents 2 and 3 is the technique for simplifying the selecting operation for both of the TV receivers described at all.

This invention has been made to solve the above problem and an object of this invention is to provide a broadcast receiver apparatus which can realize an easy channel selecting operation based on the preset channel function by use of its own remote controller with respect to other broadcast receivers connected to a network, and a broadcast receiving method and AV network system.

A broadcast receiver apparatus according to an aspect of the present invention comprises connection means for connection with an external broadcast receiver via a digital interface to control the same, and preset means for storing information items which are used to select receivable broadcast channels thereof and set to correspond to a plurality of keys and storing information items which are used to specify the external broadcast receiver, select broadcast channels which can be received by the external broadcast receiver via the digital interface and set to correspond to the plurality of keys.

Further, a broadcast receiving method according to another aspect of the present invention comprises storing information items used to select broadcast channels which can be received by a self-equipment and set to correspond to a plurality of keys provided on a remote controller to control the self-equipment, and storing information items which specify an external broadcast receiver connected via a digital interface to be controlled, cause the external broadcast receiver to select broadcast channels which can be received via the digital interface and are set to correspond to the plurality of keys provided on the remote controller.

In addition, an AV network system according to still another aspect of the present invention has first and second broadcast receivers connected to each other via a digital interface, the second broadcast receiver being controlled by the first broadcast receiver. Further, it comprises preset means for storing information items which are used to select broadcast channels which can be received by the first broadcast receiver and set to correspond to a plurality of keys provided on a remote controller to control the first broadcast receiver and storing information items which specify the second broadcast receiver, select broadcast channels which can be received by the second broadcast receiver via the digital interface and are set to correspond to the plurality of keys provided on the remote controller, identifying means for identifying an operated key among the plurality of keys provided on the remote controller, and channel selecting means for selectively causing one of the first and second broadcast receivers to perform the channel selecting operation based on the information stored by the preset means in correspondence to the key identified by the identifying means.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block configuration diagram for schematically illustrating a network system according to one embodiment of this invention;
FIG. 2 is a flowchart for illustrating a preset channel operation in the above embodiment;
FIG. 3 is a flowchart for illustrating the preset channel operation in the above embodiment;
FIG. 4 is a flowchart for illustrating the preset channel operation in the above embodiment;
FIGS. 5A to 5D are views for explaining various types of setting screens at the channel preset time in the above embodiment;
FIG. 6 is a flowchart for illustrating a first example of a channel selecting operation in the above embodiment;
FIG. 7 is a flowchart for illustrating the first example of the channel selecting operation in the above embodiment;
FIGS. 8A to 8E are views for explaining various types of screens displayed at the time of the channel selecting operation in the above embodiment;
FIG. 9 is a flowchart for illustrating a second example of the channel selecting operation in the above embodiment;
FIG. 10 is a flowchart for illustrating a third example of the channel selecting operation in the above embodiment; and
FIG. 11 is a flowchart for illustrating a fourth example of the channel selecting operation in the above embodiment.

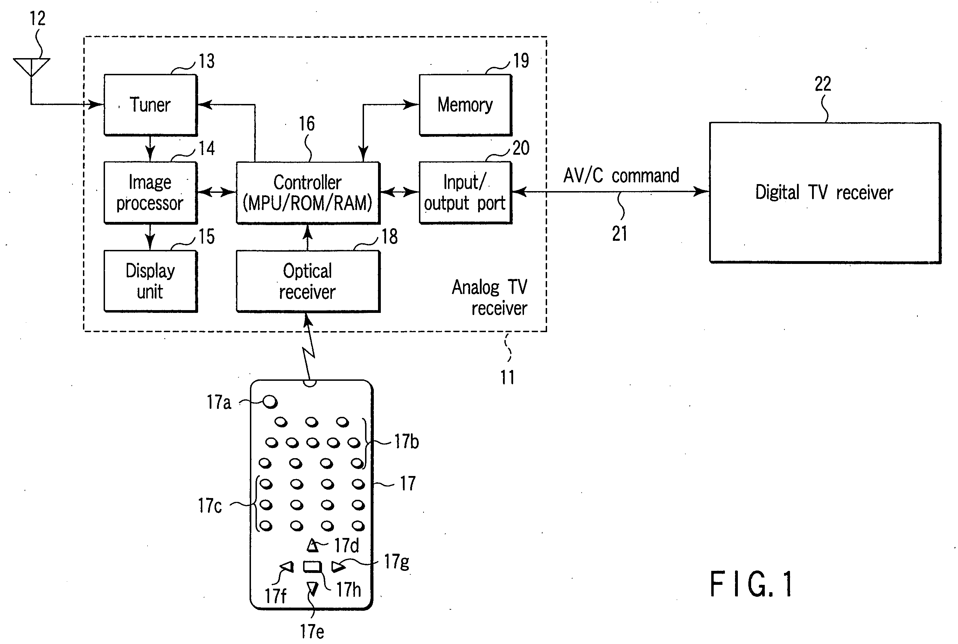

There will now be described an embodiment of this invention in detail with reference to the accompanying drawings. FIG. 1 schematically shows a network system explained in the present embodiment. That is, in FIG. 1, a symbol 11 denotes a terrestrial analog television broadcast (TV) receiver which receives a terrestrial analog TV broadcast.

In the analog TV receiver 11, the analog TV broadcasting signal received by an antenna 12 is supplied to a tuner 13 and a TV signal of a preset broadcast channel is selected.

Then, after the TV signal selected by the tuner 13 is supplied to and demodulated by an image processor 14, it is supplied to and displayed on a display unit 15. Thus, the received analog TV broadcast is reproduced.

A series of reproduction operations described above is collectively controlled by a controller 16 containing a microcomputer or the like. The controller 16 is supplied with operation information from a remote controller 17 via an optical receiver 18.

The controller 16 controls the tuner 13 and image processor 14 to reflect operation information from the remote controller 17 based on a control program stored in a memory 19.

The memory 19 provides a working area of the controller 16 and, for example, stores various types of setting data items such as a table indicating the correspondence relation between broadcast channels and keys of the remote controller 17 set by use of the channel preset function.

A power supply key 17a, various control keys 17b to control the analog TV receiver 11, position keys 17c and the like are provided on the remote controller 17. The position keys 17c are set to correspond to the broadcast channels by the channel preset function.

Further, an up key 17d, down key 17e, left key 17f, right key 17g to move a cursor displayed on the display unit 15 in up, down, right and left directions, an enter key 17h to determine an item specified by the cursor and the like are provided on the remote controller 17.

An input/output port 20 having a digital interface function and coping with the IEEE 1394 standard is connected to the controller 16. The input/output port 20 is connected to a digital TV receiver 22 coping with the terrestrial digital TV broadcast and having a digital interface function in conformity to the IEEE 1394 standard via a serial bus [i. LINK (registered trademark) cable] 21. Thus, a network system is configured.

With the above configuration, the controller 16 transmits operation information for the digital TV receiver 22 input via the remote controller 17 to the digital TV receiver 22 via the input/output port 20 and serial bus 21 as an AV (Audio Video)/C (control) command. Thus, the digital TV receiver 22 can be controlled.

The controller 16 can realize a channel preset function by setting the broadcast channels of the analog TV broadcast to correspond to the position keys 17c of the remote controller 17 and storing a table indicating the correspondence relation therebetween in the memory 19 by operating the remote controller 17.

The controller 16 controls the tuner to select an analog TV broadcast channel corresponding to an operated one of the position keys 17c by selectively operating the position key 17c of the remote controller 17. Thus, the channel selecting operation by the channel preset function is performed.

Further, the controller 16 can realize a channel preset function for the digital TV broadcast by setting broadcast channels of the digital TV broadcast which can be received by the digital TV receiver 22 to correspond to the position keys 17c of the remote controller 17 and storing a table indicting the correspondence relation therebetween in the memory 19.

In this case, the controller 16 sets the position keys 17c of the remote controller 17, the broadcast channels of the digital TV broadcast and information which specifies a digital TV receiver 22 connected to the network via the serial bus 21 to correspond to one another. Further, it stores a table indicating the correspondence relation between them in the memory 19.

When one of the position keys 17c of the remote controller 17 is selectively operated, the controller 16 transmits the AV/C command to a digital TV receiver 22 corresponding to the operated position key 17c to select a digital TV broadcast channel corresponding to the operated position key 17c. Thus, the channel selecting operation by the channel preset function is performed.

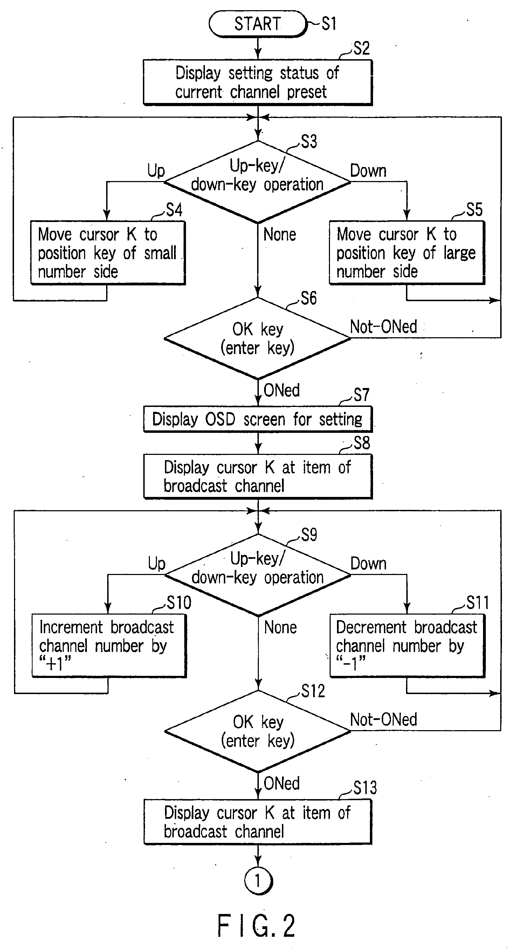

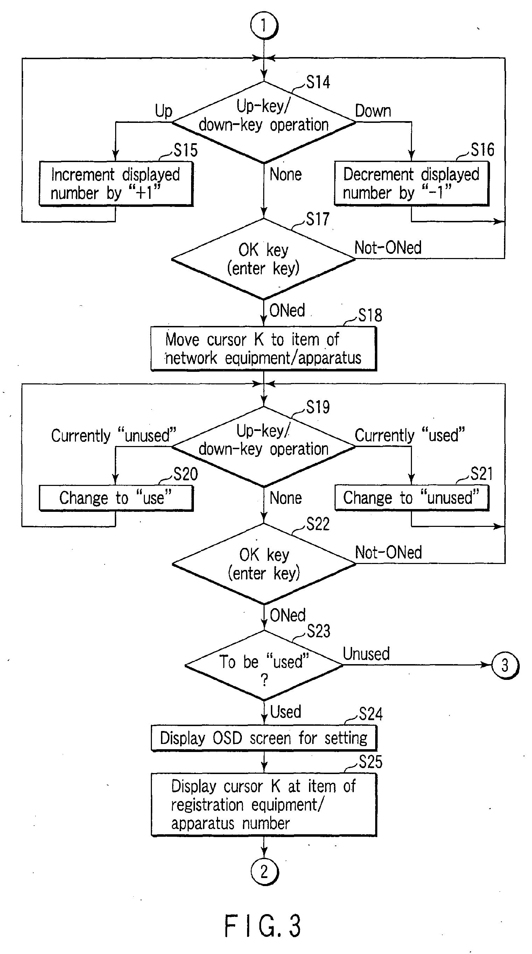

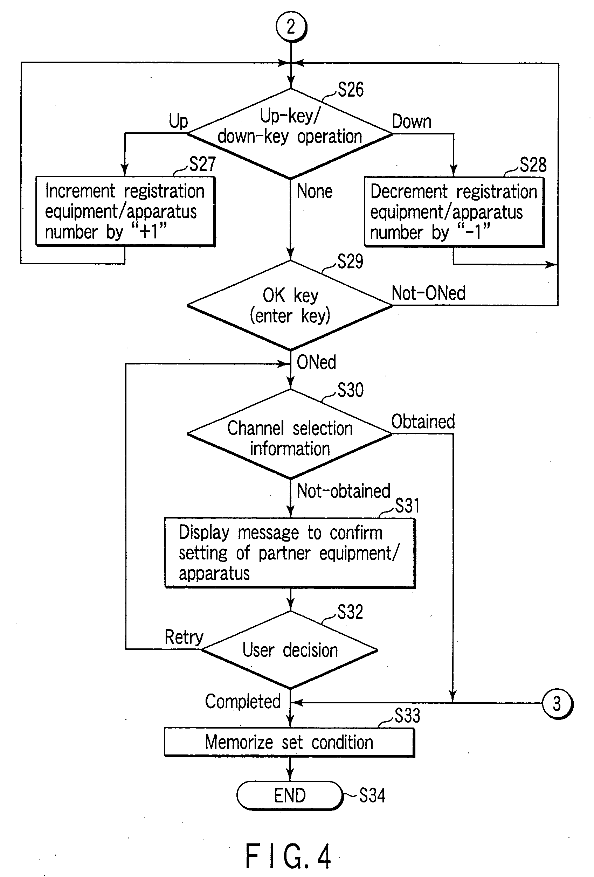

FIGS. 2, 3 and 4 are flowcharts showing a detail channel preset method for the digital TV broadcast. That is, when the channel preset operation is required by operating the remote controller 17, the operation is started (step S1).

Then, the controller 16 displays a channel setting screen indicating the present channel preset setting state stored in the memory 19 on the display unit 15 in step S2.

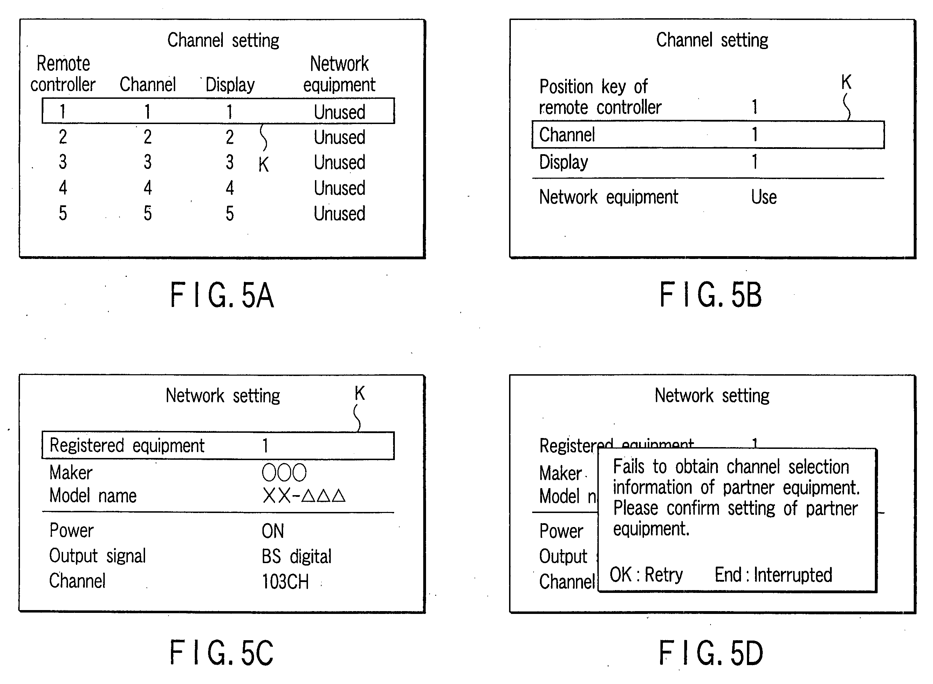

As shown in FIG. 5A, the channel setting screen displays a table in which the position keys 17c of the remote controller 17, digital broadcast channels, display numbers of the respective channels, and information items (containing an unused case) which specify equipment connected to the network to receive the respective channels are set to correspond to one another.

On the channel setting screen, a cursor K which surrounds one of the position keys 17c, and a broadcast channel, display number and equipment corresponding thereto is displayed. The cursor K is displayed to make the color of a portion surrounded by the frame different from the color of other portions.

Next, in step S3, the controller 16 determines whether or not one of the up key 17d and down key 17e of the remote controller 17 has been operated.

If the up key 17d has been operated, the controller 16 shifts the cursor K towards the position key 17c side of a smaller number than the present number, that is, in an upward direction in the case of FIG. 5A in step S4.

Further, if the down key 17e has been operated, the controller 16 shifts the cursor K towards the position key 17c side of a larger number than the present number, that is, in a downward direction in the case of FIG. 5A in step S5.

If none of the keys 17d and 17e is operated, the controller 16 determines in step S6 whether or not the enter key 17h of the remote controller 17 is operated.

If the enter key 17h is operated, the controller 16 displays a setting OSD (On Screen Display) screen as shown in FIG. 5B on the display unit 15 in step S7.

The setting OSD screen shows a state in which the position key 17c having the number "1" attached thereto is selected in step S6. At this time, the present broadcast channel, the display number of the channel and use or nonuse of equipment connected to the network which are set in correspondence to the position key 17c are displayed thereon.

After this, the controller 16 displays the cursor K on the item of the broadcast channel on the setting OSD screen in step S8. Also, in this case, the cursor K is displayed to make the color of a portion in the frame different from the color of other portions.

Next, in step S9, the controller 16 determines whether or not one of the up key 17d and down key 17e of the remote controller 17 has been operated.

If the up key 17d has been operated, the controller 16 increments the number of the broadcast channel by adding "+1" to the number displayed at present ("1" in FIG. 5B) in step S10.

Further, if the down key 17e has been operated, the controller 16 decrements the number of the broadcast channel by subtracting "1" from the number displayed at present ("1" in FIG. 5B) in step S11.

If none of the keys 17d and 17e is operated, the controller 16 determines in step S12 whether or not the enter key 17h of the remote controller 17 is operated.

If the enter key 17h is operated, the controller 16 displays the cursor K on the item of the display number on the setting OSD screen in step S13. Also, in this case, the cursor K is displayed to make the color of a portion in the frame different from the color of other portions.

Then, in step S14, the controller 16 determines whether or not one of the up key 17d and down key 17e of the remote controller 17 has been operated.

If the up key 17d has been operated, the controller 16 increments the display number by adding "+1" to the number displayed at present ("1" in FIG. 5B) in step S15. Further, if the down key 17e has been operated, the controller 16 decrements the display number by subtracting "1" from the number displayed at present ("1" in FIG. 5B) in step S16.

If none of the keys 17d and 17e is operated, the controller 16 determines in step S17 whether or not the enter key 17h of the remote controller 17 is operated.

If the enter key 17h is operated, the controller 16 displays the cursor K on the item of the network equipment on the setting OSD screen in step S18. Also, in this case, the cursor K is displayed to make the color of a portion in the frame different from the color of other portions.

Then, in step S19, the controller 16 determines whether or not one of the up key 17d and down key 17e of the remote controller 17 has been operated.

If the present setting is made to indicate that the network equipment is "unused", the controller 16 makes a change to "use" in step S20 when either the up key 17d or the down key 17e is operated.

If the present setting is made to indicate that the network equipment is "used", the controller 16 makes a change to "unused" in step S21 when either the up key 17d or the down key 17e is operated.

If none of the keys 17d and 17e is operated, the controller 16 determines in step S22 whether or not the enter key 17h of the remote controller 17 is operated.

If the enter key 17h is operated, the controller 16 determines in step S23 whether or not the setting is made to indicate that the network equipment is "used". If "used" is set, the controller 16 displays the setting OSD screen used to set the network equipment to be used on the display unit 15 as shown in FIG. 5C in step S24.

The setting OSD screen shows an equipment connected to the network as a registered equipment number "1" and the maker name of the equipment, the type name, the power supply state, the form of an output signal, the channel and the like are displayed.

After this, the controller 16 displays the cursor K on the item of the registered equipment number on the setting OSD screen in step S25. Also, in this case, the cursor K is displayed to make the color of a portion in the frame different from the color of other portions.

Then, in step S26, the controller 16 determines whether or not one of the up key 17d and down key 17e of the remote controller 17 has been operated.

If the up key 17d has been operated, the controller 16 increments the registered equipment number by adding "+1" to the number displayed at present ("1" in FIG. 5C) in the step S27. Further, if the down key 17e has been operated, the controller 16 decrements the registered equipment number by subtracting "1" from the number displayed at present ("1" in FIG. 5C) in step S28.

If none of the keys 17d and 17e is operated, the controller 16 determines in step S29 whether or not the enter key 17h of the remote controller 17 is operated.

If the enter key 17h is operated, the controller 16 determines in step S30 whether or not channel information (which will be described later) of a partner equipment is acquired. If the information cannot be acquired, the controller 16 displays a message used to confirm the setting of the partner equipment as shown in FIG. 5D in step S31.

After this, the controller 16 determines in step S32 whether or not a key indicating the completion of the process is operated or whether or not the entry key 17h is operated again for retry based on the user determination. If the enter key 17h is operated, the process is returned to step S30.

Further, if the key indicating the completion of the process is operated, the controller 16 stores the set condition, that is, the position key 17c of the remote controller 17, broadcast channel, display number and information related to equipment on the network when the equipment is used which are set to correspond to one another in the memory 19 in step S33. Then, the channel preset operation is terminated (step S34).

When the_setting is detected in step S23 to indicate that the network equipment is not "used" or when channel selecting information is acquired in step S30, the controller 16 causes the process to directly proceed to step S33.

The channel selecting information is information to specify control information which is required to permit the channel selecting operation of the partner equipment to be performed from the network side. Equipment having an AV/C command (tuner command) of IEEE 1394 provided thereon is standardized to ARIB (Association of Radio Industries and Businesses) if it is a Japanese digital broadcast receiver and is required to have a channel selecting function carried out by other equipment.

As concrete items, GUID (a number separated for each unit of 64 bits) used to specify a partner equipment and data (only terrestrial digital data) corresponding to network ID, service ID (in the case of BS/110 degree CS of Japan) and +remote_control_key_id used to perform the channel selecting process are required. In the case of equipment connected to the IEEE 1394 bus, data can be normally acquired by transferring commands.

A case wherein the tuner is used is explained. However, recently, an environment in which a device is used other than the tuner and can be dealt with in the same manner as an external tuner by increasing the capacity of a storage medium and stimulating the server function thereof is being provided. Therefore, operation which is not limited to the tuner can be performed.

In the channel preset procedure, the setting of the network equipment is made after the analog setting. However, this is not limitative and a method for first selecting one of the settings and exclusively using the selected setting can be used.

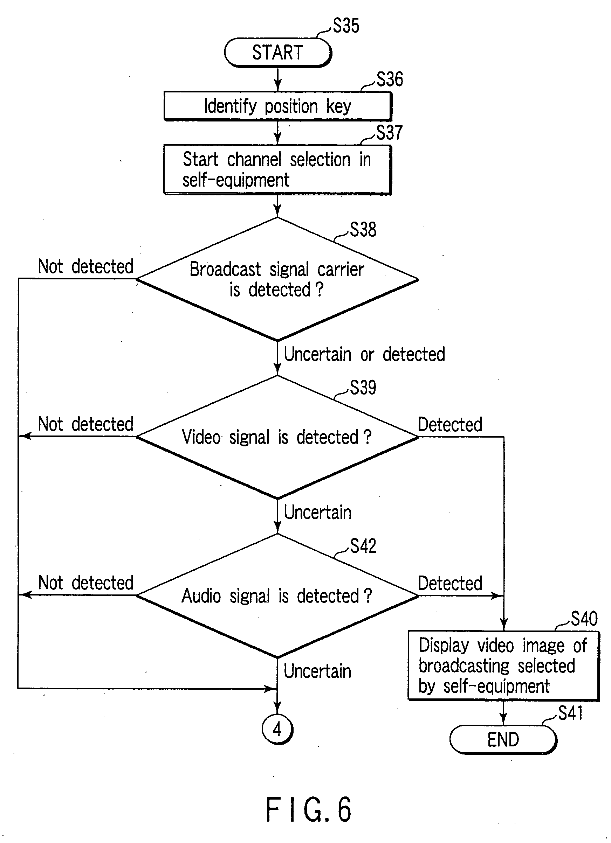

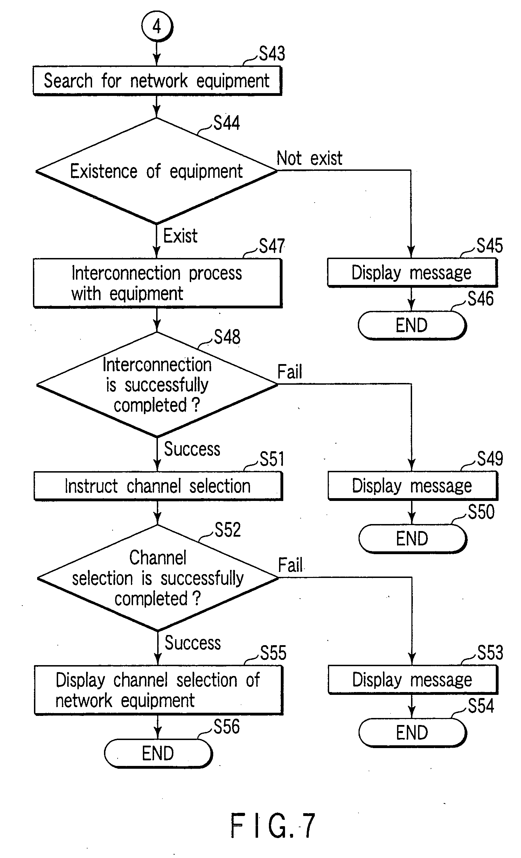

Next, the operation for operating the remote controller 17 to select the channel in a state in which the channel preset process is performed as described above is explained. FIGS. 6 and 7 show a first example of the channel selecting operation.

In the first example, first, a self-equipment (analog TV receiver 11) is selected and the channel selecting operation is performed when the position key 17c is operated. If the operation cannot be successfully performed, network equipment (digital TV receiver 22) is automatically selected and the channel selecting operation is performed.

That is, when the position key 17c of the remote controller 17 is selectively operated and the channel selecting operation is started (step S35), the controller 16 identifies the operated position key 17c in step S36. Then, it causes the self-equipment (analog TV receiver 11) to perform the channel selecting operation based on the table stored in the memory 19 in step S37.

Further, the controller 16 determines in step S38 whether or not the carrier of the broadcasting signal is detected. When the presence of the carrier is uncertain or the carrier is detected, the controller 16 determines whether or not a video signal is present in step S39.

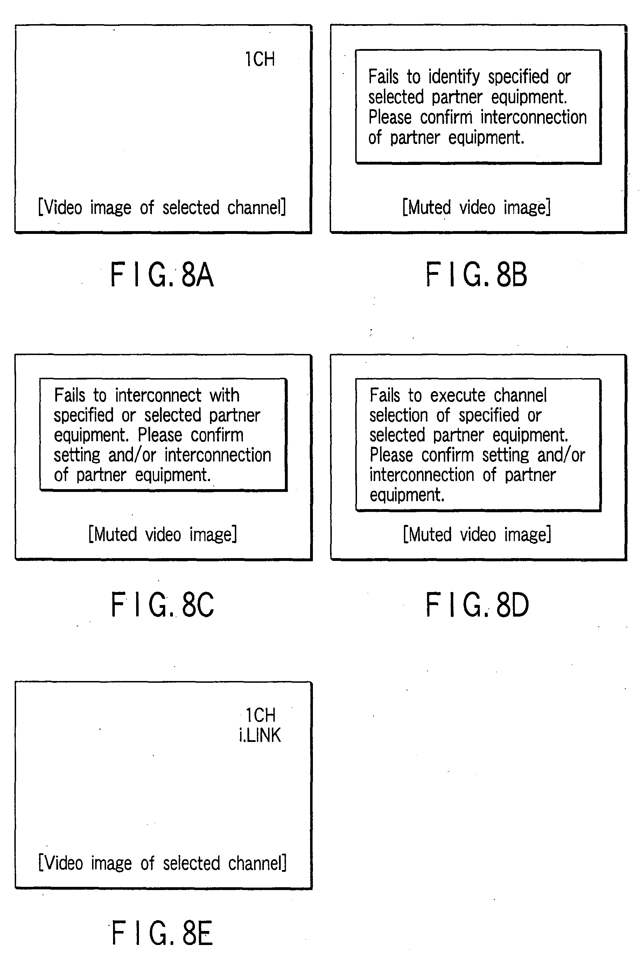

When the video signal is detected, the controller 16 causes the TV broadcasting video signal selected by the self-equipment to be displayed on the display unit 15 as shown in FIG. 8A in step S40 and then terminates the process (step S41).

When the presence or absence of the video signal is uncertain, the controller 16 determines the presence or absence of an audio signal in step S42. When the audio signal is present, the process proceeds to step S40.

When the presence or absence of the audio signal is uncertain or it is determined that at least.one of the carrier, video signal and audio signal is not present, the controller 16 retrieves specified network equipment (in this case, which is a digital TV receiver 22) based on the table stored in the memory 19 in step S43. The retrieving operation is performed by specifying a node number of equipment based on the set GUID.

Then, the controller 16 determines the presence or absence of the equipment in step S44. If the equipment is not present, the controller 16 causes a message as shown in FIG. 8B to be displayed on the display unit 15 in step S45 and terminates the process (step S46).

When the equipment is present, the controller 16 performs a process for connection with the equipment in step S47. Then, it determines in step S48 whether or not the connection is successfully made. If the connection fails to be successfully made, the controller 16 causes a message as shown in FIG. 8C to be displayed on the display unit 15 in step S49 and terminates the process (step S50).

When the connection is successfully made, the controller 16 issues a channel selection instruction to the digital TV receiver 22 based on the table stored in the memory 19 in step S51.

Then, the controller 16 determines whether or not the channel selection is successfully performed in step S52. If the channel selection fails to be successfully performed, the controller 16 causes a message as shown in FIG. 8D to be displayed on the display unit 15 in step S53 and terminates the process (step S54).

Further, when the channel selection is successfully performed, the controller 16 provides a display indicating that the channel selection is performed by the network equipment in step S55 and terminates the process (step S56).

In this case, the analog TV receiver 11 has a function of receiving the broadcasting signal of a channel selected by the digital TV receiver 22 via the serial bus 21 and displaying the same on the display unit 15. Then, "i. LINK" indicating the broadcasting video signal from the network equipment is displayed together with the broadcast channel (CH 1) on the screen of the display unit 15.

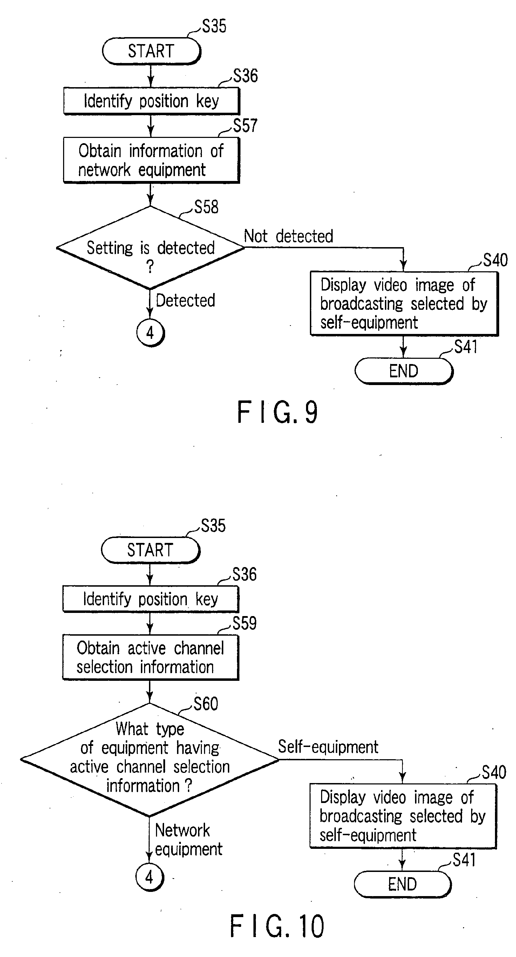

FIG. 9 shows a second example of the channel selecting operation. In the second example, when one of the position keys 17c on which the network equipment (digital TV receivers 22) are registered is operated, first, the network equipment is preferentially selected and the channel selecting operation is performed.

In the following explanation, the same symbols are attached to the same steps as those in FIG. 6. When the operated position key 17c is identified in step S36, the controller 16 acquires information of the network equipment (digital TV receiver 22) based on the table stored in the memory 19 in the step S57.

After this, the controller 16 determines in step S58 whether or not setting of the channel preset is made on the network equipment. If no setting is made, the process proceeds to step 540, and if setting is made, the process of step S43 shown in FIG. 7 is performed.

FIG. 10 shows a third example of the channel selecting operation. In the third example, information indicating which one of the self-equipment and network equipment is preferentially dealt with at the channel selection time is contained in the channel selecting information and registered at the channel preset time. Then, at the time of the channel selecting operation, the equipment having the effective channel selecting information attached thereto is preferentially selected and the channel selecting operation thereof is performed.

In the following explanation, the same symbols are attached to the same steps as those in FIG. 6. When the operated position key 17c is identified in step S36, the controller 16 acquires effective channel selecting information based on the table stored in the memory 19 in step S59.

The controller 16 determines the equipment having effective channel selecting information in step S60. If the equipment is the self-equipment, the process proceeds to step S40 and if the equipment is the network equipment, the process proceeds to step S43.

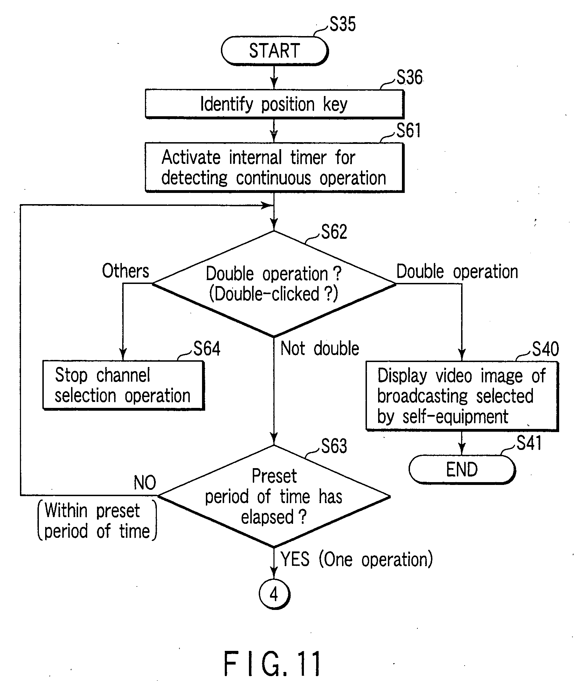

FIG. 11 shows a fourth example of the channel selecting operation. In the fourth example, if the position key 17c is successively operated twice in a preset period of time, the self-equipment is selected and the channel selecting operation is performed. If the position key 17c is operated only once in a preset period of time, the network equipment is selected and' the channel selecting operation is performed.

In the following explanation, the same symbols are attached to the same steps as those in FIG. 6. When the operated position key 17c is identified in step S36, the controller 16 sets a built-in timer for determination of successive operations into an operative state in step S61.

The controller 16 determines in step S62 whether or not the position key 17c is operated once more, that is, the position key 17c is successively operated twice (or double-clicked). If it is determined that the position key 17c is successively operated twice, the controller 16 determines that the self-equipment is selected and the process proceeds to step S40.

If none of the position keys 17c is operated, the controller 16 determines in step S63 whether or not a preset period of time has elapsed by use of the built-in timer for determination of successive operations. If the elapsed time is within the preset time (No in step S63), the process is returned to step S62.

Further, when a preset period of time has elapsed (Yes in step S63), the controller 16 determines that the position key 17c is operated only once in the preset period of time. In this case, the controller 16 determines that network equipment is selected and the process proceeds to the step S43.

If it is determined in step S62 that the position key is operated but is not operated twice, the controller 16 interrupts the channel selecting operation in step S64.

According to the above configuration, method and system, channel selecting information items of the self-equipment and channel selecting information items used to permit other broadcast receivers connected to the network to perform the channel selecting operation via the digital interface which are set to correspond to the keys of the remote controller used to control the self-equipment are stored.

Therefore, simply by operating the key of the remote controller, the channel selecting operation using the channel preset function can be performed with respect to any one of the broadcast receivers. Thus, easy channel selecting operation based on the channel preset function by using the remote controller of the self-equipment can be realized with respect to other broadcast receivers connected to the network.

As described above, according to this invention, a broadcast receiver apparatus, broadcast receiving method and AV network system can be provided in which an easy channel selecting operation based on the channel preset function by using the remote controller of the self-equipment can be realized with respect to other broadcast receivers connected to the network.

## Claims

1. A broadcast receiver apparatus (11, 17 in FIG. 1) **characterized by** comprising:
a connection unit (16, 20) configured to be connected to an external broadcast receiver (22) via a digital interface (20), said external broadcast receiver (22) being controllable via said digital interface (20); and
a preset unit (16, 17, 19) configured to store first information and second information, wherein
said first information serves to link first selection information of channels (analog broadcast channels) being receivable by the broadcast receiver apparatus (11), with first prescribed keys (17b), and
said second information serves to specify said external broadcast receiver (22) and to link second selection information of channels (digital broadcast channels) to be received by said external broadcast receiver (22), with second prescribed keys (17c).

2. The apparatus of claim 1, **characterized in that** said first and second prescribed keys (17b, 17c) are provided on a remote controller (17) for use with the broadcast receiver apparatus (11).

3. The apparatus of claim 1, **characterized in that** said preset unit includes
a first selector (16 in FIG. 1; S2-S6 in FIG. 2) configured to select one or more keys (position keys of S1, S5) from the first or second prescribed keys;
a second selector (16 in FIG. 1; S7-S12, S13-S17 in FIG. 3) configured to select one or more broadcast channels to be linked with the one or more keys selected by said first selector;
a third selector (16 in FIG. 1; S18-S23 in FIG. 3) configured to select either
using said external broadcast receiver (22) to receive the broadcast channel selected by said second selector, or
unusing said external broadcast receiver (22), and
a fourth selector (16 in FIG. 1; S24 in FIG. 3 to S32 in FIG. 4) configured to select said external broadcast receiver (22) to be used according to the selection of said third selector.

4. The apparatus of claim 3, **characterized in that** said broadcast receiver apparatus (11) is provided with a display unit (15) and is configured to be used with a remote controller (17) having keys (17a-17h) including said first and second prescribed keys (17b, 17c), and
said first to fourth selectors are configured to select one or more items (desired or required by a user) from a setting screen (FIG. 5A-5D) displayed on said display unit (15).

5. The apparatus of claim 1, **characterized by** further comprising
a key operation detector (16 in FIG. 1; S36 in FIG. 6) configured to detect an operated key from said first and second prescribed keys (17b, 17c), and
a channel selector (16, 17 in FIG. 1; S37 in FIG. 6 to S55 in FIG. 7) configured to selectively activate one of said broadcast receiver apparatus (11) and said external broadcast receiver (22) such that the selectively activated one (11 or 22) performs a channel selection according to the first or second information stored by said preset unit (16, 17, 19).

6. The apparatus of claim 5, **characterized in that** said channel selector (16, 17) is configured to perform a channel selection (S37 in FIG. 6) of the broadcast receiver apparatus (11), and, if the channel selection fails (not-detected at S38, S39, S42 in FIG. 6), said external broadcast receiver (22) is configured to perform another channel selection (S43-S55 in FIG. 7).

7. The apparatus of claim 6, **characterized in that** the failure of the channel selection of said broadcast receiver apparatus (11) is determined by detecting one of
a non-carrier of the selected channel (not-detected at S38 in FIG. 6),
a non-video signal of the selected channel (not-detected at S39 in FIG. 6), and
a non-audio signal of the selected channel (not-detected at S42 in FIG. 6).

8. The apparatus of claim 5, **characterized in that** a channel selection of the external broadcast receiver (22) has a priority higher than that of the broadcast receiver apparatus (11) when the key, detected by said key operation detector (16, 19), is linked with information for selecting a broadcast channel by said external broadcast receiver (22).

9. The apparatus of claim 5, **characterized in that** said channel selector (16, 17) selectively activates one of said broadcast receiver apparatus (11) and said external broadcast receiver (22) according to setting information (S58 in FIG. 9) stored in the preset unit (16, 17, 19), said setting information stored in the preset unit (16, 17, 19) indicating which of the broadcast receiver apparatus (11) and the external broadcast receiver (22) is to be used for the channel selection.

10. The apparatus of claim 5, **characterized in that** said channel selector (16, 17) selectively activates one of said broadcast receiver apparatus (11) and said external broadcast receiver (22) according to a number of times of operating the key (twice at S62 in FIG. 11; double-clicked), detected by said key operation detector (16, 19), within a predetermined period of time (S63 in FIG. 11).

11. A broadcast receiving method (FIGS. 2-4) **characterized by** comprising:
a first process (S1-S17, S33) for storing first information of channels (analog broadcast channels) being receivable by a primary broadcast receiver (11), said first information being obtained by linking the receivable channels with prescribed keys (17b) contained in keys (17a-17h) of a remote controller (17) provided for controlling the primary broadcast receiver (11), and
a second process (S18-S33) for storing second information of channels (digital broadcast channels) to be received by an external broadcast receiver (22) which is connected via a digital interface (20) to the primary broadcast receiver (11) such that the external broadcast receiver (22) can be controlled via said digital interface (20), wherein
said second information serves to specify said external broadcast receiver (22) and to link information for selecting channels (digital broadcast channels) being receivable via said digital interface (20) by said external broadcast receiver (22), with other prescribed keys (17c) contained in the keys (17a-17h) of said remote controller (17).

12. The apparatus of claim 11, **characterized by** further comprising:
detecting (S36 in FIG. 6) an operated key from the keys (17a-17h) of said remote controller (17), and
selectively activating (S37-S40 in FIG. 6, S43-S55 in FIG. 7) one of said primary and external broadcast receivers (11, 22) such that the selectively activated one (11 or 22) performs a channel selection according to the information stored by said preset unit (16, 17, 19).

13. The apparatus of claim 12, **characterized by** further comprising:
performing a channel selection (S37 in FIG. 6) of the primary broadcast receiver (11), and, if the channel selection fails (not-detected at S38, S39, S42 in FIG. 6), performing another channel selection (S43-S55 in FIG. 7) by said external broadcast receiver (22).

14. The apparatus of claim 12, **characterized in that** a channel selection of the external broadcast receiver (22) has a priority higher than that of the primary broadcast receiver (11) when the detected key is linked with information for selecting a broadcast channel by said external broadcast receiver (22).

15. The apparatus of claim 12, **characterized by** further comprising:
selectively activating one of said primary and external broadcast receivers (11, 22) according to setting information (S58 in FIG. 9) indicating which of the primary broadcast receiver (11) and the external broadcast receiver (22) is to be used for the channel selection.

16. The apparatus of claim 12, **characterized by** further comprising:
selectively activating one of said primary and external broadcast receivers (11, 22) according to a number of times of operating the key (twice at S62 in FIG. 11; double-clicked) within a predetermined period of time (S63 in FIG. 11).

17. An AV network system (FIG. 1) in which a first broadcast receiver (11) is connected to a second broadcast receiver (22) via a digital interface (20) so that said second broadcast receiver (22) can be controlled by said first broadcast receiver (11), and wherein said first broadcast receiver (11) is provided with a remote controller (17) having a plurality of keys (17a-17h), said system comprising:
a preset unit (16, 17, 19) configured to store first information and second information, wherein
said first information serves to link first selection information of channels (analog broadcast channels) being receivable by said first broadcast receiver (11), with first prescribed keys (17b) contained in the keys (17a-17h) of said remote controller (17), and
said second information serves to specify said second broadcast receiver (22) and to link second selection information of channels (digital broadcast channels) to be received by said second broadcast receiver (22), with second prescribed keys (17c) contained in the keys (17a-17h) of said remote controller (17),
a key operation detector (16, 19) configured to detect an operated key from the keys (17a-17h) of said remote controller (17), and
a channel selector (16, 17) configured to selectively activate one of said first and second broadcast receivers (11, 22) such that the selectively activated one (11 or 22) performs a channel selection according to the information stored by said preset unit (16, 17, 19).
